# EUROPEAN PATENT SPECIFICATION

(11) **EP 0 841 766 B1**
(45) Date of publication and mention of the grant of the patent: **09.05.2001**
(21) Application number: 96402393.1
(22) Date of filing: 08.11.1996
(51) Int. Cl.: H04L 7/00, H04J 3/06

(54) **Method to synchronise data transmission between a receiver and a transmitter**
Datenübertragungssynchronisierungsverfahren zwischen einem Sender und einem Empfänger
Méthode pour synchroniser la transmission de données entre un récepteur et un transmetteur

(43) Date of publication of application: 13.05.1998
(73) Proprietor: ALCATEL, 75008 Paris (FR)
(72) Inventor: Van Der Putten, Frank Octaaf, 2811 Hombeek (BE); Spruyt, Paul Marie Pierre, 3001 Heverlee (BE); Adriaensen, Karel, 2000 Antwerpen (BE)
(74) Representative: Narmon, Gisèle Marie Thérèse

(56) References cited:
- DE-A- 4 225 407
- US-A- 5 430 724
- US-A- 5 434 892

## Description

The present invention relates to a method to synchronize data as described in the preamble of claim 1, and a transmitter and a receiver realizing said method as described in the preambles of claim 3 and claim 5.

Such a method to synchronize data is common knowledge. Indeed, e.g. in communication systems where data is sent from a transmitter to a receiver, for the receiver to be able to interprete the received data, the received data have to be synchronized in the receiver with a reference signal, usual a clock signal of the receiver. Realizing synchronization implies more complexity and therefore there is a need for additional hardware or software in the receiver. The trade-offs are generally between expense and complexity, on one hand, and error performance on the other hand. However, some kind of receivers e.g. receivers using asymmetric digital subscriber line technology are required to have both, a low complexity and also a low error performance.

A synchronization method to synchronize data in a receiver with a clock signal of the receiver is e.g. described in the US patent 'Throttling circuit for a data transfer system' with Patent Number 5434892 and filing date 16 September, 1994. Herein a data transfer system is described which typically includes a number of components, each operating under an independent clock. When this occurs, each of the components of the data processing system typically transfers data at its own data transfer rate which is based on the clock of the respective component. Therefore, when data transfer is required between two components of different data transfer rates of the data processing system, a FIFO buffer is typically used that receives the data from a transmitting component at the data transfer rate of the transmitting component and sends the data to the receiving component at the data transfer rate of the receiving component. According to this patent the data transfer system includes a buffer for storing data that is to be transferred out of the buffer and a register circuit coupled to the buffer for receiving data from the buffer. The buffer and the register circuit are each operating under an independent clock. As it is described in the first column, lines 46-52, in order to receive data from the FIFO buffer at a data transfer rate of the register circuit, the register circuit sends a request signal to the FIFO.

Thus, the above mentioned patent discloses a method to realize synchronization in a register circuit of data sent from a FIFO buffer and throttling circuit to the register circuit with a clock signal available in the register circuit. The method includes the steps of :
- in the register circuit generating trigger signals from the internal clock signal;
- sending the trigger signals from the register circuit to the FIFO buffer and the throttling circuit; and
- upon receipt of the trigger signals by the FIFO buffer and throttling circuit sending the data from the FIFO buffer and throttling circuit to the register circuit.

In this way a method to adapt the data rate between a transmitter and a receiver having different data rates with a rather low complexity and a low error performance at the receiving side is provided.

However, a receiver such as a receiver using asymmetric digital subscriber technology, organizes user information i.e. the received data together with overhead information into uniformly sized groups of data streams when transferring the received data.

In the event of applying the cited prior art synchronization method, the receiver would generate trigger signals i.e. request signals, which would provide a merely adaptation of the data rate of the data to the operating clock of the receiver whereby data could be received at a desired data rate even when overhead information is to be transmitted by the receiver and no data is needed. In this way the received data would still have to be buffered before being framed whereby the desired low complexity at the receiver side is not achieved.

An object of the present invention is to provide a method to realize synchronization in a receiver with a signal available in the receiver, which is suited for use in communication systems where a low complexity and a low error performance is required at the receiving side of the communication system.According to the invention, this object is achieved by the method to synchronize data as described in claim 1, and the transmitter and the receiver realizing the method as described in claim 3 and claim 5, respectively.

Indeed, due to the trigger signals generated from the signal available in the receiver and sent to the transmitter, the transmitter is able to send the data to the receiver upon receipt of the trigger signals i.e. at the right time to ensure synchronization between the data received in the receiver and the available signal. In this way, the complexity of the synchronization process is moved from the receiver side to the transmitter side of the communication system and each level of synchronization can be realized with
the required level of error performance and without making the receiver too complex. Furthermore are the trigger signals generated by the receiver from the signal in accordance with time moments when the data is needed to fit into a predetermined place in a data stream whereby the trigger signals are indicating that the transmitter is permitted to send the data to the receiver. The transmitter must be able to send data even if the trigger signals are sent in an asynchronous way. This is for instance the case when the receiver has to receive the data at a time moment at which the data has just to fit at a predefined place in a frame. In this way frame synchronization is achieved.

Yet another characteristic feature of the present invention is that in the event that no data is available in the transmitter to be sent upon receipt of the trigger signals, the transmitter is able to generate idle data and to send this idle data to the receiver. In this way, e.g. the frame synchronization process is not disturbed. This is described in the method of claim 2 and the transmitter of claim 6. An important application of the present invention is that the receiver is included in an asymmetric digital subscriber line (ADSL) modem. This is described in claim 4. In such receiver, the received data is framed into an asymmetric digital subscriber line frame and sent over twisted pair. However in known ADSL modems using the known synchronization methods, when the modem receives data at a higher frequency than the frequency at which the data is send, the data has to be buffered before being framed. As already mentioned above, it is important to keep the complexity of a receiver in such a modem low. By using the method of the invention, the asymmetric digital subscriber line modem gets rid of the buffering aspect. In fact the buffering is again moved from the receiver to the transmitter which now must be able to buffer the data until he receives a trigger signal of the receiver to have the permission to sent the data to the receiver. Therefore, this way of synchronizing is especially suited for systems wherein there is anyway buffering foreseen at the transmitting side, e.g. for Asynchronous Transmission Mode (ATM) systems.

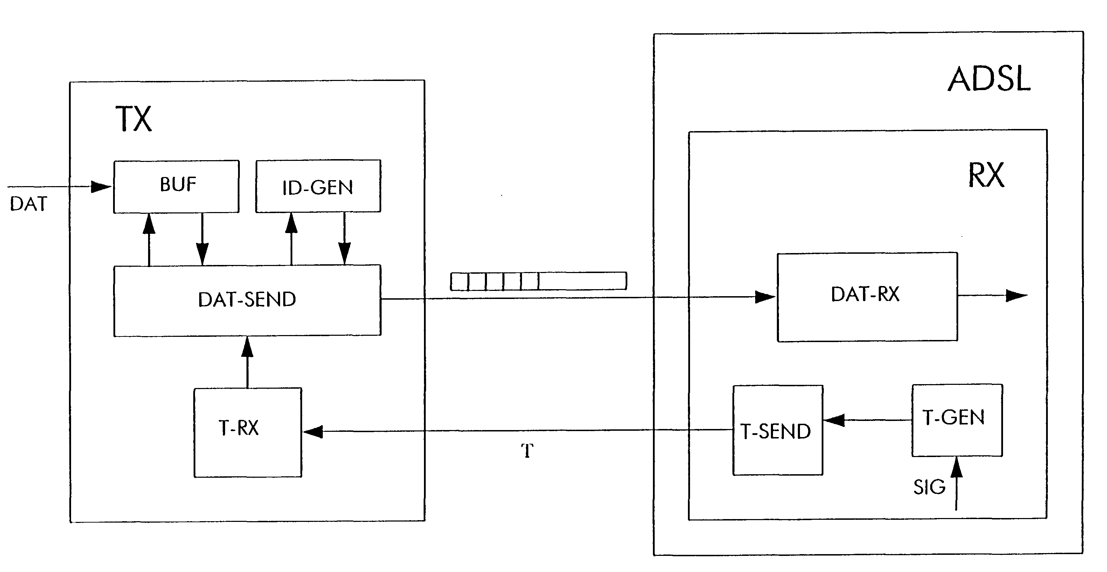

The above mentioned and other objects and features of the invention will become more apparent and the invention itself will be best understood by referring to the following description of an embodiment taken in conjunction with the accompanying figure which is a block scheme of a synchronisation system including a transmitter and a receiver realising the method of the invention.

Referring to the figure, the working of the synchronisation system will be described. First, the working of the synchronisation system will be explained by means of a functional description of the blocks shown in the Figure. Based on this description implementation of the functional blocks will be obvious to a person skilled in the art and will therefor not be described in detail. In addition, the principle working of the synchronisation system will be described in further detail.

The synchronisation system includes a transmitter TX and an asymmetric digital subscriber line modem (ADSL modem) ADSL.
The transmitter TX includes four functional blocks :
- a buffer BUF;
- an idle data generating means ID-GEN ;
- a data sending means DAT-SEND; and
- a trigger receiving means T-RX.

The buffer BUF is included to buffer the data DAT presented to the transmitter TX. This data DAT can be digital data of any kind, however, for this embodiment the data DAT is asynchronous data i.e. data organised following the asynchronous transfer mode (ATM) technique. As mentioned, the buffer BUF buffers the data DAT presented to the transmitter TX. However, it has to be understood that the buffer BUF will only do this when it is nessary i.e. when the transmitter receives more data DATA then he is allowed to send.

The idle data generating means ID-GEN is included to generate idle data. It has to be remarked that this one of the typical ATM functionalities. Idle data is send whenever there is no information available at the side of the sender at the moment of transmission. They allow a full asynchronous operation of both sender and receiver.

The data sending means DAT-SEND is included to send data from the transmitter TX to the ADSL modem. This data can be useful user information i.e. the data DAT coming from the buffer BUF or idle data, coming from the idle data generating means ID-GEN.

The trigger receiving means T-RX is included to receive trigger signals T coming from the ADSL modem. Upon receipt of such a trigger signal, the data sending means DAT-SEND is on his turn triggered by the trigger receiving means T-RX and is allowed to send data.

The ADSL modem includes besides a receiver RX also the characteristic functional blocks of an ADSL modem. Since the description of the ADSL technology goes beyond the scope of this invention, these functional blocks are not shown in the figure. However, it is worth to mention here that one of the functional blocks of such an ADSL modem is a framer which organizes overhead information and user information i.e. the incoming data DAT into ADSL frames, i.e. uniformly sized groups of bits used to organize the ADSL data stream.

The receiver RX includes three functional blocks :
- trigger generating means T-GEN;
- trigger sending means T-SEND; and
- data receiving means DAT-RX.

The trigger generating means T-GEN is included to generate trigger signals T from an available signal SIG in the receiver RX. This available signal SIG is generated in accordance with the time moments whenever data DAT is needed to fit into an available ADSL frame on a predetermined place. This signal S is not necessary a clock signal. Indeed, looking to the form of an ADSL frame, not the whole frame must be filled with data DAT, so by consequence, the signal S is not a signal with a constant frequency.

It has to be remarked here that the trigger signals T are allowed to be of any kind e.g. one single bit pulse or a predefined codeword as long as the trigger generating means T-GEN of the receiver RX and the trigger receiving means T-RX of the transmitter TX are lined up with each other.

The trigger sending means T-SEND is included to send the trigger signals T from the receiver RX to the transmitter TX and the data receiving means DAT-RX is included to receive the data DAT coming from the transmitter TX.

The transmission medium for sending the trigger signals is in the figure depicted as a separate line to simplify the description of the working of the system. However these signals can (and usually are) transmitted over the same transmission medium, i.e. twisted pair, as the data.

The principle working of the synchronisation system will be described in the following paragraph.

Whenever data DAT is needed to fit in an available ADSL frame on a predetermined place, a trigger signal T is generated from the available signal SIG and transmitted to the transmitter TX. Upon receipt of a trigger signal T the trigger receiving means T-RX gives a signal to the data sending means DAT-SEND, e.g. by means of a controle signal, and DAT-SEND on his turn requests data DAT to the buffer BUF. When there is data DAT available in the buffer BUF, the data DAT is provided to the data sending means DAT-SEND. However, when no data DAT is available in the buffer, the synchronisation process may not be disturbed and the data sending means DAT-SEND requests idle data to the idle data generating means ID-GEN. The data, either user data or idle data, is sent to the receiver RX and arrives there at the right moment to fit immediately into the ADSL frame on the predetermined place whereby synchronisation is established between the data DAT and the available signal SIG.

It has to be remarked that upon receipt of a trigger signal T, the transmitter TX has to send data DAT to the receiver RX. Sending data can be done immeditely after receiving of the trigger signal T, however the invention is not restricted to such kind of synchronisation systems but is also applicable for synchronisation systems where the data DAT is only sent after a predetermined period. Indeed, in this particular embodiment, the total period between the moment of generating a particular trigger and the moment of data DAT arriving at the receiver RX to fit into a according predefined ADSL frame must be taken into account at initialisation time. It can be necessary to have a predetermined waiting period somewhere in the loop in order to be able to realise the synchronisation. Since the complexity is moved from the receiver RX to the transmitter TX, this waiting period will also be realised by the transmitter TX.

It has to be remarked that due to the cell structure of the ATM data stream whenever idle data, not corresponding to a complete idle cell has been sent, that upon receipt of subsequent trigger signals T idle data has to be sent until the complete idle cell is transmitted, even if in the mean time some data DAT becomes available in the buffer BUF.

While the principles of the invention have been described above in connection with specific apparatus, it is to be clearly understood that this description is made only by way of example and not as a limitation on the scope of the invention.

## Claims

1. A method to realize synchronization in a receiver (RX), of data (DAT) sent from a transmitter (TX) to said receiver (RX), with a signal (SIG) available in said receiver (RX), said method includes the steps of:
- by said receiver (RX) generating trigger signals (T);
- sending said trigger signals (T) from said receiver (RX) to said transmitter (TX);
- upon receipt of said trigger signals (T) by said transmitter (TX) sending said data (DAT) from said transmitter (TX) to said receiver (RX), **characterized** in that said trigger signals (T) are generated by said receiver (RX) from said signal (SIG) in accordance with time moments when said data is needed to fit into a predetermined place in a data stream and whereby said trigger signals (T) are indicating that said transmitter is permitted to send said data to said receiver.

2. The method according to claim 1, characterized in that said method further includes in the event that no data is available in said transmitter (TX) to be sent upon receipt of said trigger signals, sending idle data from said transmitter (TX) to said receiver (RX).

3. A receiver (RX) for receiving from a transmitter (TX) data (DAT), said data (DAT) having to be synchronous with a signal (SIG) available in said receiver (RX), said receiver (RX) includes:
- trigger generating means (T-GEN) to generate trigger signals (T) from said signal (SIG);
- trigger sending means (T-SEND) to send said trigger signals (T) from said receiver (RX) to said transmitter (TX);
- data receiving means (DAT-RX) to receive said data (DAT) sent by said transmitter (TX) upon receipt of said trigger signals (T) to said receiver (RX), **characterized** in that said receiver (TX) is adapted to generate said trigger signals (T) from said signal (SIG) in accordance with time moments when said data is needed to fit into a predetermined place in a data stream whereby said trigger signals (T) are indicating that transmitter is permitted to send said data to said receiver.

4. The receiver (RX) according to claim 3, characterized in that said receiver (RX) is included in an asymmetric digital subscriber line modem.

5. A transmitter (TX) for transmitting data (DAT) to a receiver (RX), said data (DAT) having to be synchronous with a signal (SIG) available in said receiver (RX), said transmitter (TX) includes:
- trigger receiving means (T-RX) to receive trigger signals (T), generated by said receiver (RX) from said signal (SIG) and sent from said receiver (RX) to said transmitter (TX);
- data sending means (DAT-SEND) to send data (DAT) from said transmitter (TX) to said receiver (RX) upon receipt of said trigger signals (T), **characterized** in that said transmitter (TX) is adapted to receive trigger signals that are generated by said receiver (RX) from said signal (SIG) in accordance with time moments when said data is needed to fit into a predetermined place in a data stream whereby said trigger signals (T) are indicating that said transmitter is permitted to send said data to said receiver and therefore further includes means to send said data (DAT) in an asynchronous way.

6. The transmitter (TX) according to claim 5, characterized in that said transmitter (TX) includes idle data generating means (ID-GEN) to generate idle data and to send said idle data from said transmitter (TX) to said receiver (RX) in the event that no data (DAT) is available in said transmitter (TX) upon receipt of said trigger signals (T).

## Patentansprüche

1. Verfahren zur Durchführung einer Synchronisierung in einem Empfänger (RX) von Daten (DAT), die von einem Sender (TX) zum Empfänger (RX) gesendet werden, mit einem Signal (SIG), das im Empfänger (RX) verfügbar ist, welches die Schritte umfaßt:
- Erzeugen von Triggersignalen (T) durch den Empfänger (RX);
- Senden der Triggersignale (T) vom Empfänger (RX) zum Sender (TX);
- bei Empfang der Triggersignale (T) durch den Sender (TX) Senden der Daten (DAT) vom Sender (TX) zum Empfänger (RX),
dadurch gekennzeichnet, daß die Triggersignale (T) vom Empfänger (RX) aus dem Signal (SIG) in Übereinstimmung mit Zeitpunkten erzeugt werden, zu denen die Daten in einen vorbestimmten Platz im Datenstrom passen müssen, und wodurch die Triggersignale (T) angeben, daß es dem Sender gestattet ist, die Daten zum Empfänger zu senden.

2. Verfahren nach Anspruch 1, dadurch gekennzeichnet, daß das Verfahren in dem Falle, daß im Sender (TX) keine Daten verfügbar sind, die bei Empfang der Triggersignale gesendet werden sollen, weiter das Senden von Leerdaten vom Sender (TX) zum Empfänger (RX) umfaßt.

3. Empfänger (RX) zum Empfangen von Daten (DAT) von einem Sender (TX), wobei die Daten (DAT) mit einem Signal (SIG), das im Empfänger (RX) verfügbar ist, synchron sein müssen, welcher Empfänger (RX) umfaßt:
- eine Triggererzeugungseinrichtung (T-GEN), um aus dem Signal (SIG) Triggersignale (T) zu erzeugen;
- eine Triggersendeeinrichtung (T-SEND), um die Triggersignale (T) vom Empfänger (RX) zum Sender (TX) zu senden;
- eine Datenempfangseinrichtung (DAT-RX), um die vom Sender (TX) bei Empfang der Triggersignale (T) zum Empfänger (RX) gesendeten Daten (DAT) zu empfangen,
dadurch gekennzeichnet, daß der Empfänger (TX) dafür ausgelegt ist, aus dem Signal (SIG) die Triggersignale (T) in Übereinstimmung mit Zeitpunkten zu erzeugen, zu denen Daten in einen vorbestimmten Platz in einem Datenstrom passen müssen, wodurch die Triggersignale (T) angeben, daß es dem Sender gestattet ist, Daten zum Empfänger zu senden.

4. Empfänger (RX) nach Anspruch 3, dadurch gekennzeichnet, daß der Empfänger (RX) in einem Modem für einen asymmetrischen digitalen Teilnehmeranschluß enthalten ist.

5. Sender (TX) zum Senden von Daten (DAT) zu einem Empfänger (RX), wobei die Daten (DAT) mit einem Signal (SIG), das im Empfänger (RX) verfügbar ist, synchron sein müssen, welcher Sender (TX) umfaßt:
- eine Triggerempfangseinrichtung (T-RX), um Triggersignale (T) zu empfangen, die vom Empfänger (RX) aus dem Signal (SIG) erzeugt und vom Empfänger (RX) zum Sender (TX) gesendet werden;
- eine Datensendeeinrichtung (DAT-SEND), um bei Empfang der Triggersignale (T) Daten (DAT) vom Sender (TX) zum Empfänger (RX) zu senden,
dadurch gekennzeichnet, daß der Sender (TX) dafür ausgelegt ist, Triggersignale zu empfangen, die vom Empfänger (RX) aus dem Signal (SIG) in Übereinstimmung mit Zeitpunkten erzeugt werden, zu denen die Daten in einen vorbestimmten Platz in einem Datenstrom passen müssen, wodurch die Triggersignale (T) angeben, daß es dem Sender gestattet ist, Daten zum Empfänger zu senden, und daher ferner eine Einrichtung umfaßt, um die Daten (DAT) asynchron zu senden.

6. Sender (TX) nach Anspruch 5, dadurch gekennzeichnet, daß der Sender (TX) eine Leerdaten erzeugende Einrichtung (ID-GEN) umfaßt, um Leerdaten zu erzeugen und in dem Falle, daß bei Empfang der Triggersignale (T) keine Daten (DAT) im Sender (TX) verfügbar sind, die Leerdaten vom Sender (TX) zum Empfänger (RX) zu senden.

## Revendications

1. Procédé pour réaliser une synchronisation dans un récepteur (RX) de données (DAT) envoyées depuis un émetteur (TX) vers ledit récepteur (RX), avec un signal (SIG) disponible dans ledit récepteur (RX), ledit procédé comportant les étapes consistant à :
- faire produire des signaux de déclenchement (T) par ledit récepteur (RX) ;
- faire envoyer lesdits signaux de déclenchement (T) par ledit récepteur (RX) vers ledit émetteur (TX) ;
- lors de la réception desdits signaux de déclenchement (T) par ledit émetteur (TX), faire envoyer lesdites données (DAT) par ledit émetteur (TX) vers ledit récepteur (RX), caractérisé en ce que lesdits signaux de déclenchement (T) sont produits par ledit récepteur (RX) à partir dudit signal (SIG) en fonction des instants où il est nécessaire que lesdites données s'ajustent à l'intérieur d'un emplacement prédéterminé dans un courant de données et de façon que lesdits signaux de déclenchement (T) indiquent que ledit émetteur est autorisé à envoyer lesdites données audit récepteur.

2. Procédé selon la revendication 1, caractérisé en ce que ledit procédé comporte en outre, dans le cas où aucune donnée n'est disponible dans ledit émetteur (TX) pour être envoyée lors de la réception desdits signaux de déclenchement, l'envoi de données d'attente dudit émetteur (TX) vers ledit récepteur (RX).

3. Récepteur (RX) pour recevoir depuis un émetteur (TX) des données (DAT), lesdites données (DAT) devant être synchrones avec un signal (SIG) disponible dans ledit récepteur (RX), ledit récepteur (RX) comportant :
- des moyens générateurs de déclenchement (T-GEN) pour produire des signaux de déclenchement (T) à partir dudit signal (SIG) ;
- des moyens d'envoi de déclenchement (T-SEND) pour envoyer lesdits signaux de déclenchement (T) dudit récepteur (RX) vers ledit émetteur (TX) ;
- des moyens récepteurs de données (DAT-RX) pour recevoir lesdites données (DAT) envoyées par ledit émetteur (TX) lors de la réception desdits signaux de déclenchement (T) vers ledit récepteur (RX), caractérisé en ce que ledit récepteur (RX) est adapté pour produire lesdits signaux de déclenchement (T) à partir dudit signal (SIG), en fonction des instants où il est nécessaire que les données s'ajustent à l'intérieur d'un emplacement prédéterminé dans un courant de données, de façon que les signaux de déclenchement (T) indiquent que l'émetteur est autorisé à envoyer lesdites données audit récepteur.

4. Récepteur (RX) selon la revendication 3, caractérisé en ce que ledit récepteur (RX) est compris dans un modem de ligne d'abonné numérique asymétrique.

5. Emetteur (TX) pour transmettre des données (DAT) vers un récepteur (RX), lesdites données (DAT) devant être synchrones avec un signal (SIG) disponible dans ledit récepteur (RX), ledit émetteur (TX) comportant :
- des moyens récepteurs de déclenchement (T-RX) pour recevoir des signaux de déclenchement (T), produits par ledit récepteur (RX) à partir dudit signal (SIG) et envoyés par ledit récepteur (RX) vers ledit émetteur (TX) ;
- des moyens d'envoi de données (DAT-SEND) pour envoyer des données (DAT) dudit émetteur (TX) vers ledit récepteur (RX), lors de la réception desdits signaux de déclenchement (T), caractérisé en ce que ledit émetteur (TX) est adapté pour recevoir des signaux de déclenchement qui sont produits par ledit récepteur (RX) à partir dudit signal (SIG) en fonction des instants où il est nécessaire que lesdites données s'ajustent à l'intérieur d'un emplacement prédéterminé dans un courant de données de façon à ce que lesdits signaux de déclenchement (T) indiquent que ledit émetteur est autorisé à envoyer lesdites données audit récepteur et comportent en outre en conséquence des moyens pour envoyer lesdites données (DAT) d'une manière asynchrone.

6. Emetteur (TX) selon la revendication 5, caractérisé en ce que ledit émetteur (TX) comporte des moyens générateurs de données d'attente (ID-GEN) pour produire des données d'attente et pour envoyer lesdites données d'attente dudit émetteur (TX) vers ledit récepteur (RX) dans le cas où aucune donnée (DAT) n'est disponible dans ledit émetteur (TX) lors de la réception desdits signaux de déclenchement (T).
